Europäisches Patentamt

European Patent Office

Office européen des brevets

(19)

(11) **EP 0 800 056 A2**

(12) **EUROPÄISCHE PATENTANMELDUNG**

(43) Veröffentlichungstag:
08.10.1997 Patentblatt 1997/41

(51) Int. Cl.$^6$: **G01B 17/02**, G01N 29/00

(21) Anmeldenummer: 97103433.5

(22) Anmeldetag: 03.03.1997

(84) Benannte Vertragsstaaten:
**AT BE CH DE DK FR GB IT LI SE**

(30) Priorität: **01.04.1996 DE 19612925**

(71) Anmelder: **FRAUNHOFER-
GESELLSCHAFT ZUR FÖRDERUNG DER
ANGEWANDTEN FORSCHUNG E.V.
80636 München (DE)**

(72) Erfinder: **Schneider, Dieter, Dr.
01219 Dresden (DE)**

(74) Vertreter: **Rauschenbach, Marion, Dipl.-Ing.
Patentanwältin
Sadisdorfer Weg 2 a
01189 Dresden (DE)**

(54)     **Verfahren zur Werkstoffprüfung von beschichteten Werkstoffen**

(57)     Die Erfindung bezieht sich auf das Gebiet der Maschinenbaus und betrifft ein Verfahren, wie es z.B. bei der Herstellung von Wendeschneidplatten zum Einsatz kommen kann.

Die Aufgabe der Erfindung besteht darin, ein Verfahren anzugeben, durch das die Werkstoffprüfung im laufenden Produktionsprozeß, schnell und unter Vermeidung von hohen Kosten und Fehlerquellen möglich ist.

Die Aufgabe wird durch ein Verfahren gelöst, bei dem zuerst an einem beschichteten Bauteil im Normzustand, mit Hilfe einer Schallquelle an einer Position von der Oberfläche dieses Bauteils Oberflächenwellen angeregt werden, die an einer Position, an der keine Randeinflüsse auftreten und die den Abstand $x_1$ von dieser Position besitzt, mit einem Schallaufnehmer empfangen und in ein elektrisches Signal $u_R(t)$ umgewandelt werden, welches gespeichert wird und bei dem das gleiche Verfahren an einem zu kontrollierenden Bauteil durchgeführt wird, bei dem das Signal $u_P(t)$ entsteht und bei dem anschließend aus diesen beiden Signalen die Kreuzkorrelationsfunktion k(t) und deren Hüllkurve H(t) gebildet wird und danach eine Auswertung erfolgt.

Fig. 1

EP 0 800 056 A2

## Beschreibung

Die Erfindung bezieht sich auf die Gebiete des Maschinenbaus und der Werkstoffprüfung und betrifft ein Verfahren zur Werkstoffprüfung von beschichteten Werkstoffen, wie es z.B. bei der Herstellung von Wendeschneidplatten oder Turbinenschaufeln zum Einsatz kommen kann.

Es ist ein Verfahren bekannt, mit dem durch Messung der Ausbreitungsgeschwindigkeit von laserinduzierten Ultraschall-Oberflächenwellen beschichtete Werkstoffe geprüft und charakterisiert werden können (DD 258 291, Schneider,D. u.a., Applied Physics A 61(1995)277, Kuschnereit,R. u.a., Applied Physics A61(1995)263).

Bei diesem Verfahren werden durch kurze Laserimpulse Oberflächenwellen angeregt und mit einem Detektor empfangen. Der Detektor ist auf der Oberfläche des Prüflings fixiert. Der Laserstrahl trifft in einer bestimmten Entfernung vom Detektor auf die Prüflingsoberfläche auf. Er regt einen akustischen Oberflächenwellenimpuls an, der sich über die Oberfläche des Prüflings ausbreitet. Dieser akustische Oberflächenwellenimpuls durchläuft vom Punkt 1 ausgehend die Strecke $x_1$ zwischen Laserstrahl und Detektor und erzeugt im Detektor ein elektrisches Signal $u_1(t)$. Im Verlauf der Messung wird der Laserstrahl zur Position 2 verschoben und dort ebenfalls ein Oberflächenwellenimpuls mit dem Laser erzeugt. Dieser Impuls durchläuft die Strecke $x_2$, wird ebenfalls mit dem Detektor empfangen und in ein elektrisches Signal $u_2(t)$ umgewandelt. Beide Signalverläufe werden Fourier-transformiert, ihre Phasenspektren $\Phi_1(f)$ und $\Phi_2(f)$ berechnet und nach der Formel

$$c(f) = \frac{(x_2 - x_1) \cdot f \cdot 2\pi}{[\Phi_2(f) - \Phi_1(f)]} \qquad\qquad (A)$$

die Schallgeschwindigkeit $c(f)$ in Abhängigkeit von der Frequenz f berechnet.

Daraus lassen sich durch Verwendung bekannter theoretischer Zusammenhänge (Farnell,G.W. u.a., Physical Acoustics, Vol IX, Academie Press, New York and London, 1972) die Dicke, der E-Modul oder die Dichte der Schicht bestimmen.

Der Nachteil dieses bekannten Verfahrens besteht darin, daß es nicht im technologischen Produktionsprozeß für eine ständige und schnelle Werkstoffprüfung einsetzbar ist, da ein Prüfzyklus mehrere Minuten erfordert und der Prüfling aus der Produktionslinie herausgenommen werden muß, um die notwendige Verschiebung des Laserstrahls von Punkt 1 nach Punkt 2 mit ausreichender Meßgenauigkeit durchzuführen.

Die Aufgabe der Erfindung besteht darin, ein Verfahren zur Werkstoffprüfung von beschichteten Werkstoffen anzugeben, mit dessen Hilfe die Werkstoffprüfung im laufenden Produktionsprozeß, schnell und unter Vermeidung von hohen Kosten und Fehlerquellen möglich ist.

Die Aufgabe wird durch die in den Ansprüchen angegebene Erfindung gelöst.

Dabei werden bei dem erfindungsgemäßen Verfahren zur Werkstoffprüfung von beschichteten Werkstoffen zuerst an einem beschichteten Bauteil (4), das hinsichtlich der Werkstoffeigenschaften dem Normzustand entspricht, mit Hilfe einer Schallquelle (1) an einer Position auf der Oberfläche dieses Bauteils (4) Oberflächenwellen angeregt, die an einer Position, an der keine Randeinflüsse auftreten und die den Abstand $x_1$ von dieser Position besitzt, mit einem Schallaufnehmer (2) empfangen und in ein elektrisches Signal $u_R(t)$ umgewandelt werden, welches gespeichert wird und bei dem dann mit der gleichen Schallquelle (1) an einer Position auf der Oberfläche des zu prüfende Bauteils (4) Oberflächenwellen angeregt werden, die an einer Position, die den Abstand $x_1$ von dieser Position besitzt, mit einem Schallaufnehmer (2) empfangen und in ein elektrisches Signal $u_P(t)$ umgewandelt werden, bei dem anschließend aus diesen beiden Signalen die Kreuzkorrelationsfunktion $k(t)$ und die Hüllkurve $H(t)$ der Kreuzkorrelationsfunktion $k(t)$ gebildet wird und danach eine Auswertung nach der Reihenfolge der Produktbildung bei der Kreuzkorrelationsbildung $k(t)$ und der Oberflächenwellengeschwindigkeit in der Schicht gegenüber dem Substrat und nach der Lage des Maximums $t_{Hül}$ der Hüllkurve $H(t)$ gegenüber der Zeit t und/oder nach der Reihenfolge der Produktbildung bei der Kreuzkorrelationsbildung $k(t)$ und der Oberflächenwellengeschwindigkeit in der Schicht gegenüber dem Substrat und nach der Lage des Maximums $t_k$ der Kreuzkorrelationsfunktion $k(t)$ gegenüber der Lage des Maximums $t_{Hül}$ der Hüllkurve $H(t)$ durchgeführt wird zur Prüfung der Werkstoffeigenschaften des zu prüfenden Bauteils (4) gegenüber den Werkstoffeigenschaften des Bauteils (4) mit den Werkstoffeigenschaften im Normzustand.

Vorteilhafterweise wird die Auswertung nach der Reihenfolge der Produktbildung bei der Kreuzkorrelationsbildung $k(t)$ und der Oberflächenwellengeschwindigkeit in der Schicht gegenüber dem Substrat und nach der Lage des Maximums $t_{Hül}$ der Hüllkurve $H(t)$ gegenüber der Zeit t und/oder nach der Reihenfolge der Produktbildung bei der Kreuzkorrelationsbildung $k(t)$ und der Oberflächenwellengeschwindigkeit in der Schicht gegenüber dem Substrat und nach der Lage des Maximums $t_k$ der Kreuzkorrelationsfunktion $k(t)$ gegenüber der Lage des Maximums $t_{Hül}$ der Hüllkurve $H(t)$ zur Prüfung der Werkstoffeigenschaften des zu prüfenden Bauteils (4) gegenüber den Werkstoffeigenschaften des Bauteils (4) mit den Werkstoffeigenschaften im Normzustand durch einen Computer (6) vorgenommen.

Weiterhin vorteilhafterweise werden als Werkstoffeigenschaften die Schichtdicke und/oder das Verhältnis von E-Modul zur Dichte der Schicht geprüft.

Es ist auch vorteilhaft, daß die Auswertung nach der Reihenfolge der Produktbildung bei der Kreuzkorrelationsbildung $k(t)$ und der Oberflächenwellengeschwindigkeit in der Schicht gegenüber dem Substrat und nach der Lage des Maximums $t_{Hül}$ der Hüllkurve H(t) gegenüber der Zeit t und/oder nach der Reihenfolge der Produktbildung bei der Kreuzkorrelationsbildung k(t) und der Oberflächenwellengeschwindigkeit in der Schicht gegenüber dem Substrat und nach der Lage des Maximums $t_k$ der Kreuzkorrelationsfunktion k(t) gegenüber der Lage des Maximums $t_{Hül}$ der Hüllkurve H(t) zur Prüfung der Werkstoffeigenschaften des zu prüfenden Bauteils (4) gegenüber den Werkstoffeigenschaften des Bauteils (4) mit den Werkstoffeigenschaften im Normzustand vorgenommen wird, wobei bei Vorliegen einer symmetrischen Form der Kreuzkorrelationsfunktion k(t) in einem vorgegebenen Toleranzbereich und bei Übereinstimmung der Lage des Maximums $t_{Hül}$ der Hüllkurve H(t) mit der Lage des Maximums der Kreuzkorrelationsfunktion k(t) in dem vorgegebenen Toleranzbereich, das zu prüfende Bauteil (4) die Werkstoffeigenschaften des Bauteiles (4) mit dem Werkstoffeigenschaften im Normzustand aufweist.

Vorteilhaft ist es auch, daß die Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_{Hül}$ der Hüllkurve H(t) gegenüber der Zeit t zur Prüfung der Werkstoffeigenschaften des zu prüfenden Bauteils (4) gegenüber den Werkstoffeigenschaften des Bauteils (4) mit den Werkstoffeigenschaften im Normzustand vorgenommen wird, wobei bei einer Produktbildung von $u_P(t) \times u_R(t)$ für die Kreuzkorrelationsfunktion k(t) und bei einer höheren Oberflächenwellengeschwindigkeit in der Schicht gegenüber dem Substrat und bei einer Verschiebung der Lage des Maximums $t_{Hül}$ der Hüllkurve H(t) zu größeren Zeiten t hin die Schichtdicke und/oder das Verhältnis von E-Modul zu Dichte der Schicht (7) des zu prüfenden Bauteils (4) einen geringeren Wert aufweist, als die Schichtdicke und/oder das Verhältnis von E-Modul zu Dichte der Schicht (7) des Bauteils (4) mit Werkstoffeigenschaften im Normzustand.

Weiterhin vorteilhaft ist es, daß die Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_{Hül}$ der Hüllkurve H(t) gegenüber der Zeit t zur Prüfung der Werkstoffeigenschaften des zu prüfenden Bauteils (4) gegenüber den Werkstoffeigenschaften des Bauteils (4) mit den Werkstoffeigenschaften im Normzustand vorgenommen wird, wobei bei einer Produktbildung von $u_P(t) \times u_R(t)$ für die Kreuzkorrelationsfunktion k(t) und bei einer höheren Oberflächenwellengeschwindigkeit in der Schicht gegenüber dem Substrat und bei einer Verschiebung der Lage des Maximums $t_{Hül}$ der Hüllkurve H(t) zu geringeren Zeiten t hin die Schichtdicke und/oder das Verhältnis von E-Modul zu Dichte der Schicht (7) des zu prüfenden Bauteils (4) einen höheren Wert aufweist, als die Schichtdicke und/oder das Verhältnis von E-Modul zu Dichte der Schicht (7) des Bauteils (4) mit Werkstoffeigenschaften im Normzustand.

Ebenfalls vorteilhaft ist es, daß die Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_{Hül}$ der Hüllkurve H(t) gegenüber der Zeit t zur Prüfung der Werkstoffeigenschaften des zu prüfenden Bauteils (4) gegenüber den Werkstoffeigenschaften des Bauteils (4) mit den Werkstoffeigenschaften im Normzustand vorgenommen wird, wobei bei einer Produktbildung von $u_P(t) \times u_R(t)$ für die Kreuzkorrelationsfunktion k(t) und bei einer niedrigeren Oberflächenwellengeschwindigkeit in der Schicht gegenüber dem Substrat und bei einer Verschiebung der Lage des Maximums $t_{Hül}$ der Hüllkurve H(t) zu geringeren Zeiten t hin die Schichtdicke geringer ist oder das Verhältnis von E-Modul zu Dichte der Schicht (7) des zu prüfenden Bauteils (4) einen höheren Wert aufweist, als die Schichtdicke oder das Verhältnis von E-Modul zu Dichte der Schicht (7) des Bauteils (4) mit Werkstoffeigenschaften im Normzustand.

Weiterhin vorteilhaft ist es, daß die Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_{Hül}$ der Hüllkurve H(t) gegenüber der Zeit t zur Prüfung der Werkstoffeigenschaften des zu prüfenden Bauteils (4) gegenüber den Werkstoffeigenschaften des Bauteils (4) mit den Werkstoffeigenschaften im Normzustand vorgenommen wird, wobei bei einer Produktbildung von $u_P(t) \times u_R(t)$ für die Kreuzkorrelationsfunktion k(t) und bei einer niedrigeren Oberflächenwellengeschwindigkeit in der Schicht gegenüber dem Substrat und bei einer Verschiebung der Lage des Maximums $t_{Hül}$ der Hüllkurve H(t) zu größeren Zeiten t hin die Schichtdicke größer ist oder das Verhältnis von E-Modul zu Dichte der Schicht (7) des zu prüfenden Bauteils (4) einen geringeren Wert aufweist, als die Schichtdicke oder das Verhältnis von E-Modul zu Dichte der Schicht (7) des Bauteils (4) mit Werkstoffeigenschaften im Normzustand.

Und auch vorteilhaft ist es, daß die Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_K$ der Kreuzkorrelationsfunktion k(t) zur Prüfung der Werkstoffeigenschaften des zu prüfenden Bauteils (4) gegenüber den Werkstoffeigenschaften des Bauteils (4) mit den Werkstoffeigenschaften im Normzustand vorgenommen wird, wobei bei einer Produktbildung von $u_P(t) \times u_R(t)$ für die Kreuzkorrelationsfunktion k(t) und bei einer höheren Oberflächenwellengeschwindigkeit in der Schicht gegenüber dem Substrat und bei einer Verschiebung der Lage des Maximums $t_K$ der Kreuzkorrelationsfunktion k(t) gegenüber der Lage des Maximums $t_{Hül}$ der Hüllkurve H(t) nach links die Schichtdicke und/oder das Verhältnis von E-Modul zu Dichte der Schicht (7) des zu prüfenden Bauteils (4) einen geringeren Wert aufweist, als die Schichtdicke und/oder das Verhältnis von E-Modul zu Dichte der Schicht (7) des Bauteils (4) mit Werkstoffeigenschaften im Normzustand.

3

Vorteilhafterweise wird die Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_K$ der Kreuzkorrelationsfunktion k(t) zur Prüfung der Werkstoffeigenschaften des zu prüfenden Bauteils (4) gegenüber den Werkstoffeigenschaften des Bauteils (4) mit den Werkstoffeigenschaften im Normzustand vorgenommen, wobei bei einer Produktbildung von $u_P(t)$ x $u_R(t)$ für die Kreuzkorrelationsfunktion k(t) und bei einer höheren Oberflächenwellengeschwindigkeit in der Schicht gegenüber dem Substrat und bei einer Verschiebung der Lage des Maximums $t_k$ der Kreuzkorrelationsfunktion k(t) gegenüber der Lage des Maximums $t_{Hül}$ der Hüllkurve H(t) nach rechts die Schichtdicke und/oder das Verhältnis von E-Modul zu Dichte der Schicht (7) des zu prüfenden Bauteils (4) einen höheren Wert aufweist, als die Schichtdicke und/oder das Verhältnis von E-Modul zu Dichte der Schicht (7) des Bauteils (4) mit Werkstoffeigenschaften im Normzustand.

Auch vorteilhafterweise wird die Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_K$ der Kreuzkorrelationsfunktion k(t) zur Prüfung der Werkstoffeigenschaffen des zu prüfenden Bauteils (4) gegenüber den Werkstoffeigenschaften des Bauteils (4) mit den Werkstoffeigenschaften im Normzustand vorgenommen, wobei bei einer Produktbildung von $u_P(t)$ x $u_R(t)$ für die Kreuzkorrelationsfunktion k(t) und bei einer geringeren Oberflächenwellengeschwindigkeit in der Schicht gegenüber dem Substrat und bei einer Verschiebung der Lage des Maximums $t_k$ der Kreuzkorrelationsfunktion k(t) gegenüber der Lage des Maximums $t_{Hül}$ der Hüllkurve H(t) nach links die Schichtdicke höher ist oder das Verhältnis von E-Modul zu Dichte der Schicht (7) des zu prüfenden Bauteils (4) einen geringeren Wert aufweist, als die Schichtdicke oder das Verhältnis von E-Modul zu Dichte der Schicht (7) des Bauteils (4) mit Werkstoffeigenschaften im Normzustand.

Ebenfalls vorteilhafterweise wird die Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_K$ der Kreuzkorrelationsfunktion k(t) zur Prüfung der Werkstoffeigenschatten des zu prüfenden Bauteils (4) gegenüber den Werkstoffeigenschaften des Bauteils (4) mit den Werkstoffeigenschaften im Normzustand vorgenommen, wobei bei einer Produktbildung von $u_P(t)$ x $u_R(t)$ für die Kreuzkorrelationsfunktion k(t) und bei einer geringeren Oberflächenwellengeschwindigkeit in der Schicht gegenüber dem Substrat und bei einer Verschiebung der Lage des Maximums $t_k$ der Kreuzkorrelationsfunktion k(t) gegenüber der Lage des Maximums $t_{Hül}$ der Hüllkurve H(t) nach rechts die Schichtdicke geringer ist oder das Verhältnis von E-Modul zu Dichte der Schicht (7) des zu prüfenden Bauteils (4) einen höheren Wert aufweist, als die Schichtdicke oder das Verhältnis von E-Modul zu Dichte der Schicht (7) des Bauteils (4) mit Werkstoffeigenschaften im Normzustand.

Es ist auch vorteilhaft, daß mit zunehmender Verschiebung der Lage des Maximums $t_{Hül}$ der Hüllkurve H(t) zu größeren oder geringeren Zeiten t hin und/oder mit zunehmender Verschiebung der Lage des Maximums $t_k$ der Kreuzkorrelationsfunktion k(t) gegenüber der Lage des Maximums $t_{Hül}$ der Hüllkurve H(t) nach rechts oder links die Abweichungen der Werkstoffeigenschaften des zu prüfenden Bauteils (4) von den Werkstoffeigenschaften des Bauteils (4), mit Werkstoffeigenschaften im Normzustand, zunimmt.

Auch ist es vorteilhaft, daß die Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_{Hül}$ der Hüllkurve H(t) gegenüber der Zeit t zur Prüfung der Werkstoffeigenschaften des zu prüfenden Bauteils (4) gegenüber den Werkstoffeigenschaften des Bauteils (4) mit den Werkstoffeigenschaften im Normzustand vorgenommen wird, wobei bei einer Produktbildung von $u_R(t)$ x $u_P(t)$ für die Kreuzkorrelationsfunktion k(t) und bei einer höheren Oberflächenwellengeschwindigkeit in der Schicht gegenüber dem Substrat und bei einer Verschiebung der Lage des Maximums $t_{Hül}$ der Hüllkurve H(t) zu niedrigeren Zeiten t hin die Schichtdicke und/oder das Verhältnis von E-Modul zu Dichte der Schicht (7) des zu prüfenden Bauteils (4) einen geringeren Wert aufweist, als die Schichtdicke und/oder das Verhältnis von E-Modul zu Dichte der Schicht (7) des Bauteils (4) mit Werkstoffeigenschaften im Normzustand.

Ebenfalls vorteilhaft ist es, daß die Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_{Hül}$ der Hüllkurve H(t) gegenüber der Zeit t zur Prüfung der Werkstoffeigenschaften des zu prüfenden Bauteils (4) gegenüber den Werkstoffeigenschaften des Bauteils (4) mit den Werkstoffeigenschaften im Normzustand vorgenommen wird, wobei bei einer Produktbildung von $u_R(t)$ x $u_P(t)$ für die Kreuzkorrelationsfunktion k(t) und bei einer höheren Oberflächenwellengeschwindigkeit in der Schicht gegenüber dem Substrat und bei einer Verschiebung der Lage des Maximums $t_{Hül}$ der Hüllkurve H(t) zu höheren Zeiten t hin die Schichtdicke und/oder das Verhältnis von E-Modul zu Dichte der Schicht (7) des zu prüfenden Bauteils (4) einen höheren Wert aufweist, als die Schichtdicke und/oder das Verhältnis von E-Modul zu Dichte der Schicht (7) des Bauteils (4) mit Werkstoffeigenschaften im Normzustand.

Und weiterhin ist es vorteilhaft, daß die Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_K$ der Kreuzkorrelationsfunktion k(t) zur Prüfung der Werkstoffeigenschaften des zu prüfenden Bauteils (4) gegenüber den Werkstoffeigenschaften des Bauteils (4) mit den Werkstoffeigenschaften im Normzustand vorgenommen wird, wobei bei einer Produktbildung von $u_R(t)$ x $u_P(t)$ für die Kreuzkorrelationsfunktion k(t) und bei einer höheren Oberflächenwellengeschwindigkeit in der Schicht gegenüber dem Substrat und bei einer Verschiebung der Lage des Maximums $t_k$ der Kreuzkorrelationsfunktion k(t) gegenüber der Lage des Maximums $t_{Hül}$ der Hüllkurve H(t) nach rechts die Schichtdicke und/oder das Verhältnis von E-Modul zu Dichte der Schicht (7) des zu prüfenden Bauteils (4) einen geringeren Wert aufweist, als die Schichtdicke und/oder das Verhältnis von E-Modul zu Dichte der Schicht (7) des Bauteils (4) mit Werkstoffeigenschaften im Normzustand.

Es sind die vorteilhaften Varianten des erfindungsgemäßen Verfahren, mit denen eine Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_{Hül}$ der Hüllkurve H(t) gegenüber der Zeit t vorgenommen werden kann, den vorteilhaften Varianten des erfindungsgemäßen Verfahrens vorzuziehen, mit denen eine Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_k$ der Kreuzkorrelationsfunktion k(t) vorgenommen werden kann.

Ultraschall-Oberflächenwellen reagieren empfindlich auf die Anwesenheit von Schichten auf der Oberfläche eines Werkstoffs. Der meßbare Parameter die Wellenausbreitung ist die Ausbreitungsgeschwindigkeit. Die Ausbreitungsgeschwindigkeit der Oberflächenwelle in einem Werkstoff ändert sich, wenn eine Schicht auf die Oberfläche aufgebracht wird, deren Materialeigenschaften sich von denjenigen des Grundmaterials unterscheiden. Durch die Bestimmung der Änderung der Schallgeschwindigkeit in Abhängigkeit von der Frequenz wird es möglich, auf die Eigenschaften (Schichtdicke, E-Modul, Dichte der Schicht) des Schichtmaterials zu schließen. Die Zusammenhänge zwischen der frequenzabhängigen Änderung der Schallgeschwindigkeit und bestimmten Eigenschaftsparametern sind bekannt.

Bei dieser Art der Ermittlung der Eigenschaften einer Schicht ist es unbedingt notwendig, die Schallgeschwindigkeit sehr genau zu bestimmen. Die Geschwindigkeit ergibt sich aus Weg- und Zeitmessung. Da das Ultraschallwellenfeld nicht sichtbar ist, kann der Abstand zwischen der Position der Anregung der Oberflächenwelle auf der Oberfläche und der Position der Aufnahme der Schallwelle nicht genau genug gemessen werden. Dies erfordert es, die Methode der Differenzmessung anzuwenden, wobei entweder die Position der Anregung oder diejenige der Aufnahme der Schallwelle verändert wird. Diese Positionsänderung kann im Gegensatz zum Absolutbetrag des Abstandes zwischen Anregung und Aufnahme der Schallwelle sehr genau gemessen werden. Die Schallgeschwindigkeit ergibt sich dann aus der Änderung des Abstandes und der damit verbundenen Änderung der Laufzeit der Schallwelle zwischen der Position der Anregung und der Aufnahme der Schallwelle (siehe Formel A). Die Positionen der Anregung und der Aufnahme der Schallwelle müssen nicht identisch mit der Lage der Schallquelle oder des Schallempfängers sein. Die Positionen können z.B. auch durch Schalleiter mit der Schallquelle oder dem Schallempfänger verbunden sein. Bei dieser Meßmethode über die Differenzmessung zur Ermittlung der Schallgeschwindigkeit muß das Bauteil genau positioniert werden. Die Lage des Bauteils oder die Position der Anregung oder der Aufnahme der Schallwelle müssen genau variiert werden. Dies erfordert Zeit und Aufwand für Justiereinrichtungen. An Bauteilen mit gekrümmten Oberflächen bestehen zusätzliche Probleme für die Positionierung und die quantitative Erfassung der Abstandsvariation. Deshalb sind mit dieser Meßmethode Meßunsicherheiten verbunden, die Fehler bei der Auswertung nach sich ziehen. Aus diesem Grunde kann man diese Meßmethode allenfalls für die Stichprobenkontrolle bei kleinen Losgrößen anwenden. Die Anwendung dieser Methode für eine Prüfung jedes Bauteils im Produktionsprozeß ist nicht möglich.

Durch das erfindungsgemäße Verfahren wird es möglich, bei Beibehaltung aller Vorteile der bekannten Meßmethode nunmehr in kurzer Zeit und ohne aufwendige Justierung eine Prüfung der Werkstoffeigenschaften jedes Bauteils im Produktionsprozeß durchzuführen.

Hinsichtlich der Positionierung der Anregung und der Aufnahme der Schallwelle ist bei dem erfindungsgemäßen Verfahren nur zu gewährleisten, daß der Abstand $x_1$ zwischen der Position der Anregung der Oberflächenwelle und der Position der Aufnahme der Oberflächenwelle bei der Messung am Bauteil mit Werkstoffeigenschaften im Normzustand gegenüber der Messung am zu prüfenden Bauteil unverändert bleibt. Der Abstand muß nicht zahlenmäßig bekannt sein. Er kann sich auch entlang einer gekrümmten Bauteiloberfläche erstrecken.

Es ist auch hier nicht erforderlich, daß sich die Schallquelle und der Schallempfänger an der Position der Anregung und der Aufnahme der Schallwelle direkt befinden. Eine Übertragung z.B. durch einen Schalleiter oder durch die Luft ist möglich.

Weiterhin ist es nach dem erfindungsgemäßen Verfahren auch nicht notwendig, die konkreten Werte für die Eigenschaften des zu prüfenden Bauteils zu kennen. Eine Ermittlung der konkreten Werte nach den bekannten Methoden ist jedoch möglich. Bei der Ermittlung des Signales $u_R(t)$ sind die konkreten Werte der Eigenschaften des Bauteils mit den Werkstoffeigenschaften im Normzustand bekannt. Das Signal $u_R(t)$ dient bei der Ermittlung der Kreuzkorrelationsfunktion k(t) und deren Hüllkurve H(t) als Vergleichswert, so daß mit dem erfindungsgemäßen Verfahren dann einerseits eine qualitative Aussage gemacht werden kann, ob die Eigenschaften an dem zu prüfenden Bauteil identisch mit denen des Bauteils im Normzustand sind oder es kann andererseits auch eine quantitative Aussage hinsichtlich der Eigenschaftswerte getroffen werden. Weiterhin kann bei Vorliegen der Kreuzkorrelationsfunktion k(t) und deren Hüllkurve H(t) eine qualitative Aussage gemacht werden, ob die Eigenschaften größer oder kleiner als die Eigenschaftswerte des Bauteils mit Werkstoffeigenschaften im Normzustand sind und eine qualitative und quantitative Einschätzung über die Höhe der Abweichung vom Normzustand gegeben werden.

Die Kreuzkorrelationsfunktion k(t) ergibt sich aus dem Produkt der beiden Signale $u_P(t)$ und $u_R(t)$ nach der folgenden Beziehung

$$k(t) = \lim_{\tau \to \infty} 1/2\tau \int_{-\tau}^{\tau} u_P(T) \cdot u_R(T+t)dT \qquad (B)$$

Bei Computer-technischen Anwendungen werden aus den unendlichen, analogen Funktionen endliche Zahlenfolgen $u_R(i\Delta t)$ und $u_P(i\Delta t)$, wobei $\Delta t$ das Zeitintervall ist, mit welcher der an sich kontinuierliche Funktionsverlauf gemessen wird und i die Laufvariable ist, die von 1 bis N reicht. Aus der Integration wird die folgende Summation

$$k(j \cdot \Delta t) = 1/N \sum_{i=1}^{N} u_P(i \cdot \Delta t) \cdot u_R[(i+j) \cdot \Delta t]. \qquad (C)$$

Für die Kreuzkorrelationsfunktion $k(j\Delta t)$ ergibt sich eine Zahlenfolge von N Werten mit der Laufvariablen j. Das Ergebnis der analogen wie der diskreten Kreuzkorrelation ist abhängig von der Reihenfolge, mit der die Multiplikation von $u_P(t)$ und $u_R(t)$ ausgeführt wird. Die Funktion kehrt ihren zeitlichen Verlauf um, wenn die Reihenfolge der beiden Funktionen vertauscht wird. Dies bedeutet, daß unter diesen Umständen alle Verschiebungen der Kreuzkorrelationsfunktion und ihrer Hüllkurve, die als Folge der Abweichungen des zu prüfenden Bauteils von dem Bauteil mit Werkstoffeigenschaften im Normzustand auftreten, auf der Zeitachse in die entgegengesetzte Richtung erfolgen.
Deshalb bestimmt die Reihenfolge, mit der bei der praktischen Verwirklichung des Verfahrens die Multiplikation von $u_P(t)$ und $u_R(t)$ ausgeführt wird, die Auswahl der Entscheidungskriterien dafür, ob die Eigenschaft ober- oder unterhalb des Wertes der Eigenschaft im Normzustand liegt.
Im folgenden wird die Erfindung an drei Ausführungsbeispielen erläutert.

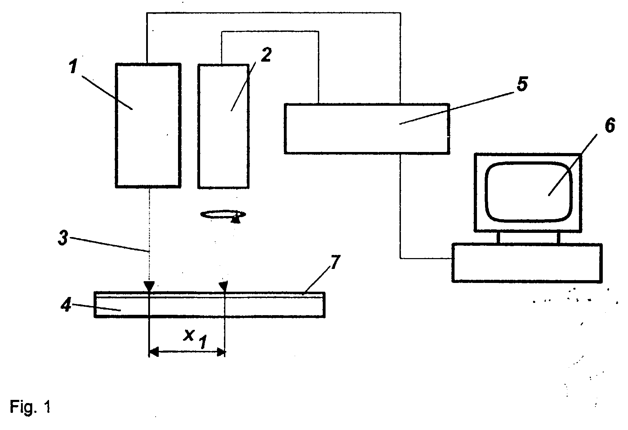

Dabei zeigt Figur 1 einen Aufbau der Einrichtung zur Werkstoffprüfung eines beschichteten Bauteils
Figur 2 zeigt ein Oszillogramm eines beschichteten Bauteils mit Werkstoffeigenschaften im Normzustand und eines beschichteten zu prüfenden Bauteils, entsprechend Beispiel 1
Figur 3 zeigt die Abbildung der aus den Signalen $u_P(t)$ x $u_R(t)$ gebildeten Kreuzkorrelationsfunktion k(t) und deren Hüllkurve H(t) nach Beispiel 1
Figur 4 zeigt einen weiteren Aufbau der Einrichtung zur Werkstoffprüfung eines beschichteten Bauteils
Figur 5 zeigt die Kreuzkorrelationsfunktionen k(t) und deren Hüllkurve H(t), die an zwei weiteren Bauteilen mit der Zusammensetzung nach Beispiel 1 erhalten wurden, bei denen die Verschiebung der Funktionen gegenüber dem Normzustand auftritt
Figur 6 zeigt ein Oszillogramm eines beschichteten Bauteils mit Werkstoffeigenschaften im Normzustand und eines beschichteten zu prüfenden Bauteils, entsprechend Beispiel 2
Figur 7 zeigt die Abbildung der aus den Signalen $u_P(t)$ x $u_R(t)$ gebildeten Kreuzkorrelationsfunktion k(t) und deren Hüllkurve H(t) nach Beispiel 2
Figur 8 zeigt die Kreuzkorrelationsfunktionen k(t) und deren Hüllkurve H(t), die an zwei weiteren Bauteilen mit der Zusammensetzung nach Beispiel 2 erhalten wurden, bei denen die Verschiebung der Funktionen gegenüber dem Normzustand auftritt

Beispiel 1

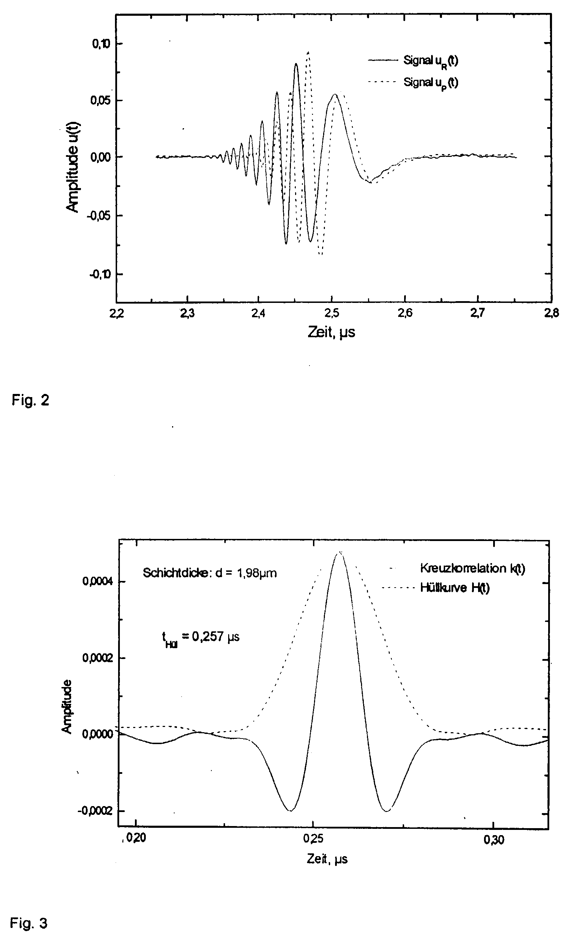

Als Schallquelle wird ein Impulslaser 1 verwendet und als Schallempfänger ein berührungsloser Schwingungsdetektor 2. Der Strahl 3 des Impulslasers 1 wird auf der Position der Oberfläche des beschichteten Bauteils 4 mit Werkstoffeigenschaften im Normzustand abgebildet, an welcher der Schallimpuls angeregt werden soll. Im Abstand $x_1$ von dieser Position wird der Schwingungsdetektor 2 positioniert. Der Laserimpuls regt einen akustischen Oberflächenwellenimpuls an, der den Abstand $x_1$ durchläuft und von dem Schwingungsdetektor 2 empfangen wird. Hier wird er in ein elektrisches Signal $u_R(t)$ umgewandelt, mit einem Digitaloszilloskop 5 aufgezeichnet und in einem Computer 6 gespeichert. Die Schichtdicke der TiN-Schicht 7 des Stahl-Bauteils 4 mit Werkstoffeigenschaften im Normzustand beträgt d = 2 μm. TiN hat eine höhere Oberflächenwellengeschwindigkeit als Stahl. Das von diesem Bauteil 4 mit einem Digitaloszilloskop 5 erhaltene Signal $u_R(t)$ ist in Figur 2 zu sehen.

Der gleiche Meßvorgang wird an dem beschichteten zu prüfenden Bauteil 4 durchgeführt. Dieses Bauteil 4 besteht ebenfalls aus Stahl und ist mit einer TiN-Schicht 7 beschichtet. Das bei der Messung im Digitaloszilloskop 5 erhaltene Signal $u_P(t)$ wird ebenfalls aufgezeichnet und ist auch in Figur 2 zu sehen. Aus beiden Signalen wird die Kreuzkorrelationsfunktion k(t) und die Hüllkurve H(t) der Kreuzkorrelationsfunktion k(t) gebildet, die in Figur 3 zu sehen ist. Die Kreuzkorrelationsfunktion k(t) ist in den vorgegebenen Toleranzgrenzen symmetrisch und ihr Maximum $t_k$ fällt mit dem Maximum $t_{Hül}$ der Hüllkurve H(t) zusammen. Das heißt, daß die Schichtdicke der TiN-Schicht 7 auf dem zu prüfenden Bauteil 4 der Schichtdicke der TiN-Schicht 7 auf dem Bauteil 4 mit Werkstoffeigenschaften im Normzustand entspricht, d.h. ebenfalls 2 μm ist.

Zum Vergleich wurde an weiteren Bauteilen 4, die hinsichtlich Zusammensetzung und Aufbau dem Bauteil 4 nach Beispiel 1 entsprechen, das in Beispiel 1 beschriebene Verfahren zur Werkstoffprüfung angewandt.

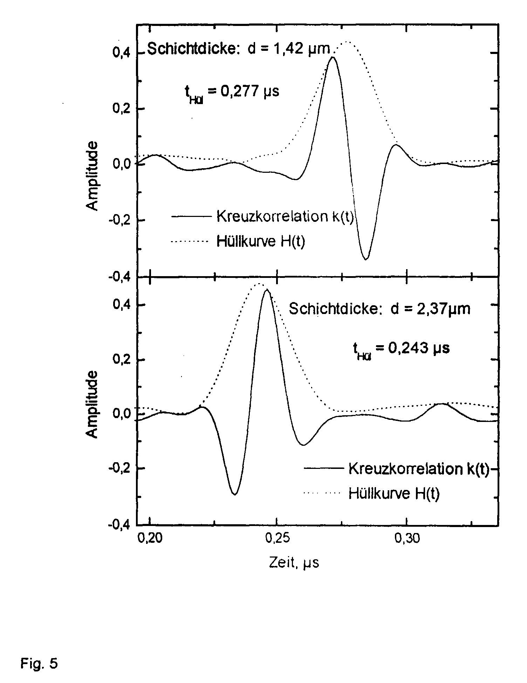

Dabei ergaben sich die in Figur 5 abgebildeten Kreuzkorrelationsfunktionen k(t) und deren Hüllkurven H(t).

Im ersten Fall ist das Maximum der Hüllkurve H(t) der Kreuzkorrelationsfunktion k(t) gegenüber dem Normzustand ($t_{Hül}$ = 0,257 μs) zu einer größeren Zeit $t_{Hül}$ = 0,277 μs verschoben worden und das Maximum $t_k$ der Kreuzkorrelationsfunktion k(t) liegt links neben dem Maximum $t_{Hül}$ der Hüllkurve H(t). Dies deutet darauf hin, daß die Schichtdicke niedriger ist als bei dem Bauteil mit einer Schichtdicke im Normzustand.

Im zweiten Fall ist das Maximum $t_{Hül}$ der Hüllkurve H(t) der Kreuzkorrelationsfunktion k(t) gegenüber dem Normzustand ($t_{Hül}$ = 0,257 μs) zu einer geringeren Zeit $t_{Hül}$ = 0,243 μs verschoben worden und das Maximum $t_k$ der Kreuzkorrelationsfunktion k(t) liegt rechts neben dem Maximum $t_{Hül}$ der Hüllkurve H(t). Dies deutet darauf hin, daß die Schichtdicke höher ist als bei dem Bauteil mit der Schichtdicke im Normzustand.

Die Größe des Unterschiedes gibt Auskunft über den Grad der Abweichung der Schichtdicke von der geforderten Schichtdicke von 2 μm.

Beispiel 2

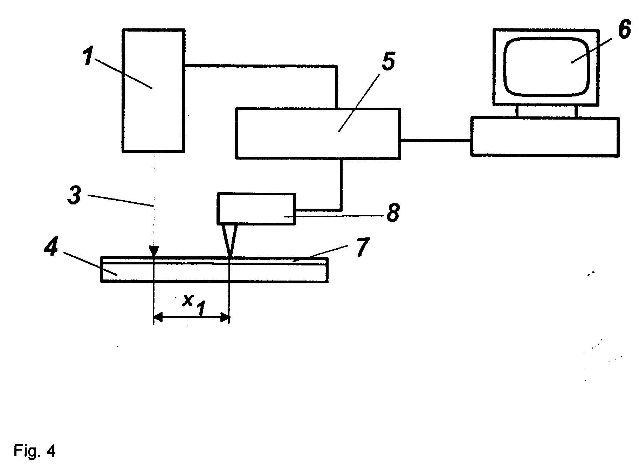

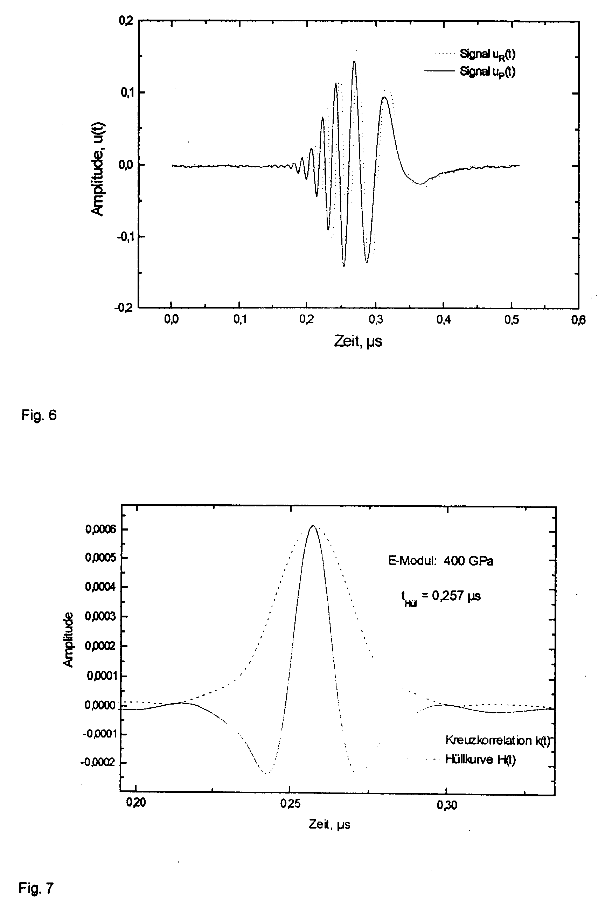

Als Schallquelle wird ein Impulslaser 1 verwendet und als Schallempfänger ein piezoelektrischer Schallwandler 8 (Figur 4). Der Schallwandler 8 wird an die Oberfläche des Bauteils 4 mit Werkstoffeigenschaften im Normzustand angekoppelt. Der Strahl 3 des Impulslasers 1 wird auf der Position der Oberfläche des beschichteten Bauteils 4 mit Werkstoffeigenschaften im Normzustand, an welcher der Schallimpuls angeregt werden soll, in einer Brennlinie fokussiert. Im Abstand $x_1$ von dieser Position ist der Schallwandler 8 positioniert. Der Laserimpuls regt einen akustischen Oberflächenwellenimpuls an, der den Abstand $x_1$ durchläuft und von dem Schallwandler 8 empfangen wird. Hier wird er in ein elektrisches Signal $u_R(t)$ umgewandelt, mit einem Digitaloszilloskop 5 aufgezeichnet und in einem Computer 6 gespeichert. Die Schichtdicke der TiN-Schicht 7 des Stahl-Bauteils 4 mit Werkstoffeigenschaften im Normzustand beträgt d = 2 μm und der E-Modul einen Wert von 400 GPa. Der E-Modul ist ein Maß für die Stöchiometrie des TiN. Ein hoher Wert ist anzustreben, da in diesem Fall der Gehalt beider Atomsorten (Titan-und Stickstoffatome) im TiN nahezu gleich ist. Dieses sogenannte "stöchiometrische" TiN hat auch die höchste Härte und damit die besten Verschleißeigenschaften. Das von diesem Bauteil 4 mit einem Digitaloszilloskop 5 erhaltene Signal $u_R(t)$ ist in Figur 6 zu sehen.

Der gleiche Meßvorgang wird an dem beschichteten zu prüfenden Bauteil 4 durchgeführt. Dieses Bauteil 4 besteht ebenfalls aus Stahl und ist mit einer TiN-Schicht 7 beschichtet. Das bei der Messung im Digitaloszilloskop 5 erhaltene Signal $u_P(t)$ wird ebenfalls aufgezeichnet und ist auch in Figur 6 zu sehen. Aus beiden Signalen wird die Kreuzkorrelationsfunktion k(t) und deren Hüllkurve H(t) gebildet, die in Figur 7 zu sehen ist. Die Kreuzkorrelationsfunktion k(t) ist in den vorgegebenen Toleranzgrenzen symmetrisch und ihr Maximum $t_k$ fällt mir dem Maximum $t_{Hül}$ der Hüllkurve H(t) zusammen. Das heißt, daß die Schichtdicke und der E-Modul der TiN-Schicht 7 auf dem Bauteil 4, dessen Werkstoffeigenschaften kontrolliert werden sollten, den Werkstoffeigenschaften der TiN-Schicht 7 auf dem Bauteil 4 mit Werkstoffeigenschaften im Normzustand entspricht.

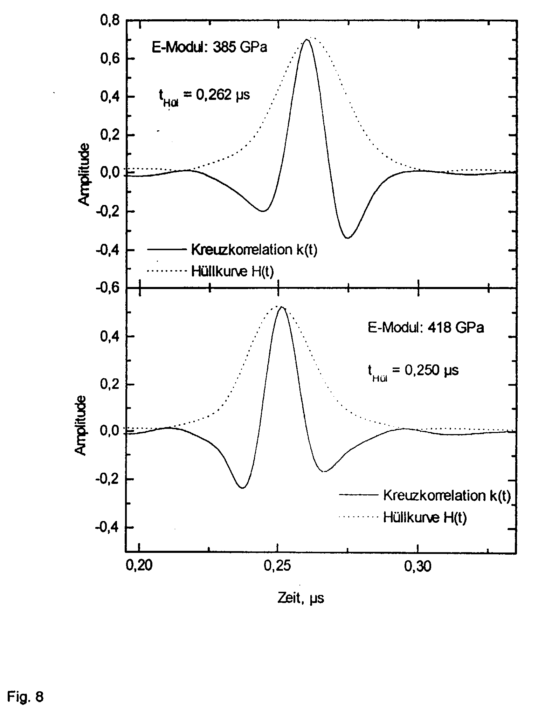

Zum Vergleich wurde an zwei weiteren Bauteilen 4, die alle eine TiN-Schicht 7 mit einer Dicke von 2 μm (± 0,05 μm) aufweisen, das in Beispiel 2 beschriebene Verfahren zur Werkstoffprüfung angewandt. Dabei ergeben sich die in Figur 8 abgebildeten Kreuzkorrelationsfunktionen k(t) und deren Hüllkurven H(t).

Im ersten Fall ist das Maximum $t_{Hül}$ der Hüllkurve H(t) der Kreuzkorrelationsfunktion k(t) gegenüber dem Normzustand ($t_{Hül}$ = 0,257 μs) zu einer größeren Zeit $t_{Hül}$ = 0,262 μs verschoben worden und das Maximum $t_k$ der Kreuzkorrelationsfunktion k(t) liegt links neben dem Maximum $t_{Hül}$ der Hüllkurve H(t). Dies deutet darauf hin, daß der E-Modul geringer ist als bei dem Bauteil mit dem E-Modul im Normzustand.

Im zweiten Fall ist das Maximum $t_{Hül}$ der Hüllkurve H(t) der Kreuzkorrelationsfunktion k(t) gegenüber dem Normzustand ($t_{Hül}$ = 0,257 μs) zu einer geringeren Zeit $t_{Hül}$ = 0,25 μs verschoben worden und das Maximum $t_k$ der Kreuzkorrelationsfunktion k(t) liegt rechts neben dem Maximum $t_{Hül}$ der Hüllkurve H(t). Dies deutet darauf hin, daß der E-Modul größer ist als bei dem Bauteil mit dem E-Modul im Normzustand.

Bezugszeichenliste

1     Impulslaser

2     Schwingungsdetektor

3     Laserstrahl

4     Bauteil

5     Digitaloszilloskop

6     Computer

7     Schicht auf dem Bauteil

8     piezoelektrischer Schallwandler

**Patentansprüche**

1. Verfahren zur Werkstoffprüfung von beschichteten Werkstoffen bei dem zuerst an einem beschichteten Bauteil (4), das hinsichtlich der Werkstoffeigenschaften dem Normzustand entspricht, mit Hilfe einer Schallquelle (1) an einer Position auf der Oberfläche dieses Bauteils (4) Oberflächenwellen angeregt werden, die an einer Position, an der keine Randeinflüsse auftreten und die den Abstand $x_1$ von dieser Position besitzt, mit einem Schallaufnehmer (2) empfangen und in ein elektrisches Signal $u_R(t)$ umgewandelt werden, welches gespeichert wird und bei dem dann mit der gleichen Schallquelle (1) an einer Position auf der Oberfläche des zu prüfende Bauteils (4) Oberflächenwellen angeregt werden, die an einer Position, die den Abstand $x_1$ von dieser Position besitzt, mit einem Schallaufnehmer (2) empfangen und in ein elektrisches Signal $u_P(t)$ umgewandelt werden, bei dem anschließend aus diesen beiden Signalen die Kreuzkorrelationsfunktion k(t) und die Hüllkurve H(t) der Kreuzkorrelationsfunktion k(t) gebildet wird und danach eine Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_{Hül}$ der Hüllkurve H(t) gegenüber der Zeit t und/oder nach der Reihenfolge der Produktbildung bei der Kreuzkorrelationsbildung k(t) und der Oberflächenwellengeschwindigkeit in der Schicht gegenüber dem Substrat und nach der Lage des Maximums $t_K$ der Kreuzkorrelationsfunktion k(t) gegenüber der Lage des Maximums $t_{Hül}$ der Hüllkurve H(t) durchgeführt wird zur Prüfung der Werkstoffeigenschaffen des zu prüfenden Bauteils (4) gegenüber den Werkstoffeigenschaften des Bauteils (4) mit den Werkstoffeigenschaffen im Normzustand.

2. Verfahren nach Anspruch 1, bei dem die Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_{Hül}$ der Hüllkurve H(t) gegenüber der Zeit t und/oder nach der Reihenfolge der Produktbildung bei der Kreuzkorrelationsbildung k(t) und der Oberflächenwellengeschwindigkeit in der Schicht gegenüber dem Substrat und nach der Lage des Maximums $t_K$ der Kreuzkorrelationsfunktion k(t) gegenüber der Lage des Maximums $t_{Hül}$ der Hüllkurve H(t) zur Prüfung der Werkstoffeigenschaften des zu prüfenden Bauteils (4) gegenüber den Werkstoffeigenschaften des Bauteils (4) mit den Werkstoffeigenschaften im Normzustand durch einen Computer (6) vorgenommen wird.

3. Verfahren nach Anspruch 1, bei dem als Werkstoffeigenschaften die Schichtdicke und/oder das Verhältnis von E-Modul zur Dichte der Schicht geprüft werden.

4. Verfahren nach Anspruch 1, bei dem die Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_{Hül}$ der Hüllkurve H(t) gegenüber der Zeit t und/oder nach der Reihenfolge der Produktbildung bei der Kreuzkorrelationsbildung k(t) und der Oberflächenwellengeschwindigkeit in der Schicht gegenüber dem Substrat und nach der Lage des Maximums $t_K$ der Kreuzkorrelationsfunktion k(t) gegenüber der Lage des Maximums $t_{Hül}$ der Hüllkurve H(t) zur Prüfung der Werkstoffeigenschaften des zu prüfenden Bauteils (4) gegenüber den Werkstoffeigenschaften des Bauteils (4) mit den Werkstoffeigenschaften im Normzustand vorgenommen wird, wobei bei Vorliegen einer symmetrischen Form der Kreuzkorrelationsfunktion k(t) in einem vorgegebenen Toleranzbereich und bei Übereinstimmung der Lage des Maximums $t_{Hül}$ der Hüllkurve H(t) mit der Lage des Maximums der Kreuzkorrelationsfunktion k(t) in dem vorgegebenen Toleranzbereich, das zu prüfende Bauteil (4) die Werkstoffeigenschaften des Bauteiles (4) mit dem Werkstoffeigenschaften im Normzustand aufweist.

5.  Verfahren nach Anspruch 1, bei dem die Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_{Hül}$ der Hüllkurve H(t) gegenüber der Zeit t zur Prüfung der Werkstoffeigenschaften des zu prüfenden Bauteils (4) gegenüber den Werkstoffeigenschaften des Bauteils (4) mit den Werkstoffeigenschaften im Normzustand vorgenommen wird, wobei bei einer Produktbildung von $u_P(t)$ x $u_R(t)$ für die Kreuzkorrelationsfunktion k(t) und bei einer höheren Oberflächenwellengeschwindigkeit in der Schicht gegenüber dem Substrat und bei einer Verschiebung der Lage des Maximums $t_{Hül}$ der Hüllkurve H(t) zu größeren Zeiten t hin die Schichtdicke und/oder das Verhältnis von E-Modul zu Dichte der Schicht (7) des zu prüfenden Bauteils (4) einen geringeren Wert aufweist, als die Schichtdicke und/oder das Verhältnis von E-Modul zu Dichte der Schicht (7) des Bauteils (4) mit Werkstoffeigenschaften im Normzustand.

6.  Verfahren nach Anspruch 1, bei dem die Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_{Hül}$ der Hüllkurve H(t) gegenüber der Zeit t zur Prüfung der Werkstoffeigenschaften des zu prüfenden Bauteils (4) gegenüber den Werkstoffeigenschaften des Bauteils (4) mit den Werkstoffeigenschaften im Normzustand vorgenommen wird, wobei bei einer Produktbildung von $u_P(t)$ x $u_R(t)$ für die Kreuzkorrelationsfunktion k(t) und bei einer höheren Oberflächenwellengeschwindigkeit in der Schicht gegenüber dem Substrat und bei einer Verschiebung der Lage des Maximums $t_{Hül}$ der Hüllkurve H(t) zu geringeren Zeiten t hin die Schichtdicke und/oder das Verhältnis von E-Modul zu Dichte der Schicht (7) des zu prüfenden Bauteils (4) einen höheren Wert aufweist, als die Schichtdicke und/oder das Verhältnis von E-Modul zu Dichte der Schicht (7) des Bauteils (4) mit Werkstoffeigenschaften im Normzustand.

7.  Verfahren nach Anspruch 1, bei dem die Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_{Hül}$ der Hüllkurve H(t) gegenüber der Zeit t zur Prüfung der Werkstoffeigenschaften des zu prüfenden Bauteils (4) gegenüber den Werkstoffeigenschaften des Bauteils (4) mit den Werkstoffeigenschaften im Normzustand vorgenommen wird, wobei bei einer Produktbildung von $u_P(t)$ x $u_R(t)$ für die Kreuzkorrelationsfunktion k(t) und bei einer niedrigeren Oberflächenwellengeschwindigkeit in der Schicht gegenüber dem Substrat und bei einer Verschiebung der Lage des Maximums $t_{Hül}$ der Hüllkurve H(t) zu geringeren Zeiten t hin die Schichtdicke geringer ist oder das Verhältnis von E-Modul zu Dichte der Schicht (7) des zu prüfenden Bauteils (4) einen höheren Wert aufweist, als die Schichtdicke oder das Verhältnis von E-Modul zu Dichte der Schicht (7) des Bauteils (4) mit Werkstoffeigenschaften im Normzustand.

8.  Verfahren nach Anspruch 1, bei dem die Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_{Hül}$ der Hüllkurve H(t) gegenüber der Zeit t zur Prüfung der Werkstoffeigenschaften des zu prüfenden Bauteils (4) gegenüber den Werkstoffeigenschaften des Bauteils (4) mit den Werkstoffeigenschaften im Normzustand vorgenommen wird, wobei bei einer Produktbildung von $u_P(t)$ x $u_R(t)$ für die Kreuzkorrelationsfunktion k(t) und bei einer niedrigeren Oberflächenwellengeschwindigkeit in der Schicht gegenüber dem Substrat und bei einer Verschiebung der Lage des Maximums $t_{Hül}$ der Hüllkurve H(t) zu größeren Zeiten t hin die Schichtdicke größer ist oder das Verhältnis von E-Modul zu Dichte der Schicht (7) des zu prüfenden Bauteils (4) einen geringeren Wert aufweist, als die Schichtdicke oder das Verhältnis von E-Modul zu Dichte der Schicht (7) des Bauteils (4) mit Werkstoffeigenschaften im Normzustand.

9.  Verfahren nach Anspruch 1, bei dem die Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_K$ der Kreuzkorrelationsfunktion k(t) zur Prüfung der Werkstoffeigenschaften des zu prüfenden Bauteils (4) gegenüber den Werkstoffeigenschaften des Bauteils (4) mit den Werkstoffeigenschaften im Normzustand vorgenommen wird, wobei bei einer Produktbildung von $u_P(t)$ x $u_R(t)$ für die Kreuzkorrelationsfunktion k(t) und bei einer höheren Oberflächenwellengeschwindigkeit in der Schicht gegenüber dem Substrat und bei einer Verschiebung der Lage des Maximums $t_k$ der Kreuzkorrelationsfunktion k(t) gegenüber der Lage des Maximums $t_{Hül}$ der Hüllkurve H(t) nach links die Schichtdicke und/oder das Verhältnis von E-Modul zu Dichte der Schicht (7) des zu prüfenden Bauteils (4) einen geringeren Wert aufweist, als die Schichtdicke und/oder das Verhältnis von E-Modul zu Dichte der Schicht (7) des Bauteils (4) mit Werkstoffeigenschaften im Normzustand.

10. Verfahren nach Anspruch 1, bei dem die Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_K$ der Kreuzkorrelationsfunktion k(t) zur Prüfung der Werkstoffeigenschaften des zu prüfenden Bauteils (4) gegenüber den Werkstoffeigenschaften des Bauteils (4) mit den Werkstoffeigenschaften im Normzustand vorgenommen wird, wobei bei einer Produktbildung von $u_P$(t) x $u_R$(t) für die Kreuzkorrelationsfunktion k(t) und bei einer höheren Oberflächenwellengeschwindigkeit in der Schicht gegenüber dem Substrat und bei einer Verschiebung der Lage des Maximums $t_k$ der Kreuzkorrelationsfunktion k(t) gegenüber der Lage des Maximums $t_{Hül}$ der Hüllkurve H(t) nach rechts die Schichtdicke und/oder das Verhältnis von E-Modul zu Dichte der Schicht (7) des zu prüfenden Bauteils (4) einen höheren Wert aufweist, als die Schichtdicke und/oder das Verhältnis von E-Modul zu Dichte der Schicht (7) des Bauteils (4) mit Werkstoffeigenschaften im Normzustand.

11. Verfahren nach Anspruch 1, bei dem die Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_K$ der Kreuzkorrelationsfunktion k(t) zur Prüfung der Werkstoffeigenschaften des zu prüfenden Bauteils (4) gegenüber den Werkstoffeigenschaften des Bauteils (4) mit den Werkstoffeigenschaften im Normzustand vorgenommen wird, wobei bei einer Produktbildung von $u_P$(t) x $u_R$(t) für die Kreuzkorrelationsfunktion k(t) und bei einer geringeren Oberflächenwellengeschwindigkeit in der Schicht gegenüber dem Substrat und bei einer Verschiebung der Lage des Maximums $t_k$ der Kreuzkorrelationsfunktion k(t) gegenüber der Lage des Maximums $t_{Hül}$ der Hüllkurve H(t) nach links die Schichtdicke höher ist oder das Verhältnis von E-Modul zu Dichte der Schicht (7) des zu prüfenden Bauteils (4) einen geringeren Wert aufweist, als die Schichtdicke oder das Verhältnis von E-Modul zu Dichte der Schicht (7) des Bauteils (4) mit Werkstoffeigenschaften im Normzustand.

12. Verfahren nach Anspruch 1, bei dem die Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_K$ der Kreuzkorrelationsfunktion k(t) zur Prüfung der Werkstoffeigenschaften des zu prüfenden Bauteils (4) gegenüber den Werkstoffeigenschaften des Bauteils (4) mit den Werkstoffeigenschaften im Normzustand vorgenommen wird, wobei bei einer Produktbildung von $u_P$(t) x $u_R$(t) für die Kreuzkorrelationsfunktion k(t) und bei einer geringeren Oberflächenwellengeschwindigkeit in der Schicht gegenüber dem Substrat und bei einer Verschiebung der Lage des Maximums $t_k$ der Kreuzkorrelationsfunktion k(t) gegenüber der Lage des Maximums $t_{Hül}$ der Hüllkurve H(t) nach rechts die Schichtdicke geringer ist oder das Verhältnis von E-Modul zu Dichte der Schicht (7) des zu prüfenden Bauteils (4) einen höheren Wert aufweist, als die Schichtdicke oder das Verhältnis von E-Modul zu Dichte der Schicht (7) des Bauteils (4) mit Werkstoffeigenschaften im Normzustand.

13. Verfahren nach Anspruch 1, bei dem mit zunehmender Verschiebung der Lage des Maximums $t_{Hül}$ der Hüllkurve H(t) zu größeren oder geringeren Zeiten t hin und/oder mit zunehmender Verschiebung der Lage des Maximums $t_k$ der Kreuzkorrelationsfunktion k(t) gegenüber der Lage des Maximums $t_{Hül}$ der Hüllkurve H(t) nach rechts oder links die Abweichungen der Werkstoffeigenschaften des zu prüfenden Bauteils (4) von den Werkstoffeigenschaften des Bauteils (4), mit Werkstoffeigenschaften im Normzustand, zunimmt.

14. Verfahren nach Anspruch 1, bei dem die Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_{Hül}$ der Hüllkurve H(t) gegenüber der Zeit t zur Prüfung der Werkstoffeigenschaften des zu prüfenden Bauteils (4) gegenüber den Werkstoffeigenschaften des Bauteils (4) mit den Werkstoffeigenschaften im Normzustand vorgenommen wird, wobei bei einer Produktbildung von $u_R$(t) x $u_P$(t) für die Kreuzkorrelationsfunktion k(t) und bei einer höheren Oberflächenwellengeschwindigkeit in der Schicht gegenüber dem Substrat und bei einer Verschiebung der Lage des Maximums $t_{Hül}$ der Hüllkurve H(t) zu niedrigeren Zeiten t hin die Schichtdicke und/oder das Verhältnis von E-Modul zu Dichte der Schicht (7) des zu prüfenden Bauteils (4) einen geringeren Wert aufweist, als die Schichtdicke und/oder das Verhältnis von E-Modul zu Dichte der Schicht (7) des Bauteils (4) mit Werkstoffeigenschaften im Normzustand.

15. Verfahren nach Anspruch 1, bei dem die Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_{Hül}$ der Hüllkurve H(t) gegenüber der Zeit t zur Prüfung der Werkstoffeigenschaften des zu prüfenden Bauteils (4) gegenüber den Werkstoffeigenschaften des Bauteils (4) mit den Werkstoffeigenschaften im Normzustand vorgenommen wird, wobei bei einer Produktbildung von $u_R$(t) x $u_P$(t) für die Kreuzkorrelationsfunktion k(t) und bei einer höheren Oberflächenwellengeschwindigkeit in der Schicht gegenüber dem Substrat und bei einer Verschiebung der Lage des Maximums $t_{Hül}$ der Hüllkurve H(t) zu höheren Zeiten t hin die Schichtdicke und/oder das Verhältnis von E-Modul zu Dichte der Schicht (7) des zu prüfenden Bauteils (4) einen höheren Wert aufweist, als die Schichtdicke und/oder das Verhältnis von E-Modul zu Dichte der Schicht (7) des Bauteils (4) mit Werkstoffeigenschaften im Normzustand.

16. Verfahren nach Anspruch 1, bei dem die Auswertung nach der Reihenfolge der Produktbildung bei der Kreuzkorrelationsbildung k(t) und der Oberflächenwellengeschwindigkeit in der Schicht gegenüber dem Substrat und nach der Lage des Maximums $t_K$ der Kreuzkorrelationsfunktion k(t) zur Prüfung der Werkstoffeigenschaften des zu prüfenden Bauteils (4) gegenüber den Werkstoffeigenschaften des Bauteils (4) mit den Werkstoffeigenschaften im Normzustand vorgenommen wird, wobei bei einer Produktbildung von $u_R(t) \times u_P(t)$ für die Kreuzkorrelationsfunktion k(t) und bei einer höheren Oberflächenwellengeschwindigkeit in der Schicht gegenüber dem Substrat und bei einer Verschiebung der Lage des Maximums $t_K$ der Kreuzkorrelationsfunktion k(t) gegenüber der Lage des Maximums $t_{Hül}$ der Hüllkurve H(t) nach rechts die Schichtdicke und/oder das Verhältnis von E-Modul zu Dichte der Schicht (7) des zu prüfenden Bauteils (4) einen geringeren Wert aufweist, als die Schichtdicke und/oder das Verhältnis von E-Modul zu Dichte der Schicht (7) des Bauteils (4) mit Werkstoffeigenschaften im Normzustand.

**1**

**2**

**5**

**6**

**3**

**4**

**7**

$x_1$

Fig. 1

Fig. 2

Fig. 3

Fig. 4

Fig. 5

Fig. 6

Fig. 7

Fig. 8